# EUROPÄISCHE PATENTSCHRIFT

(11) **EP 1 137 679 B1**
(45) Veröffentlichungstag und Bekanntmachung des Hinweises auf die Patenterteilung: **01.12.2004**
(21) Anmeldenummer: 99971821.6
(22) Anmeldetag: 30.10.1999
(51) Int. Cl.: C08F 26/02, C08F 8/12, D21H 17/37, D21H 21/10

(54) **WÄSSRIGE DISPERSIONEN VON WASSERLÖSLICHEN POLYMERISATEN VON N-VINYLCARBONSÄUREAMIDEN, VERFAHREN ZU IHRER HERSTELLUNG UND IHRE VERWENDUNG**
AQUEOUS DISPERSIONS OF WATER-SOLUBLE POLYMERS OF N-VINYL CARBOXYLIC ACID AMIDES, METHOD FOR THE PRODUCTION AND USE THEREOF
DISPERSIONS AQUEUSES DE POLYMERISATS D'AMIDES D'ACIDES N-VINYLCARBOXYLIQUES SOLUBLES DANS L'EAU, LEUR PROCEDE DE FABRICATION ET LEUR UTILISATION

(30) Priorität: 05.11.1998 DE 19851024
(43) Veröffentlichungstag der Anmeldung: 04.10.2001
(73) Patentinhaber: BASF AKTIENGESELLSCHAFT, 67056 Ludwigshafen (DE)
(72) Erfinder: NEGELE, Anton, D-67146 Deidesheim (DE); GAUWEILER, Werner, D-67363 Lustadt (DE); MEIXNER, Hubert, D-67069 Ludwigshafen (DE); MAHR, Norbert, D-67117 Limburgerhof (DE); RÜBENACKER, Martin, D-67122 Altrip (DE)
(86) Internationale Anmeldenummer: PCT/EP1999/008284
(87) Internationale Veröffentlichungsnummer: WO 2000/027893

(56) Entgegenhaltungen:
- EP-A- 0 510 246
- WO-A-98/54234
- US-A- 5 290 880
- US-A- 5 720 888
- CHEMICAL ABSTRACTS, vol. 131, no. 12, 20. September 1999 (1999-09-20) Columbus, Ohio, US; abstract no. 158334, NISHIMURA, AKIKO ET AL: "Aqueous dispersion vinylamine polymer and its manufacture" XP002131536 & JP 11 228704 A (KURITA WATER INDUSTRIES, LTD., JAPAN;MITSUBISHI CHEMICAL INDUSTRIES LT) 24. August 1999 (1999-08-24)
- CHEMICAL ABSTRACTS, vol. 121, no. 8, 22. August 1994 (1994-08-22) Columbus, Ohio, US; abstract no. 84100, UYAMA, HIROSHI ET AL: "Dispersion polymerization of N-vinylformamide in polar media. Preparation of monodisperse hydrophilic polymer particles" XP002131537 & POLYM. J. (TOKYO) (1994), 26(7), 858-63 ,
- CHEMICAL ABSTRACTS, vol. 128, no. 10, 9. März 1998 (1998-03-09) Columbus, Ohio, US; abstract no. 115786, MIYASHIMA, TORU: "Manufacture of polymer liquid dispersions with good handling property and stability for organic sludge flocculants and paper additives" XP002131404 & PATENT ABSTRACTS OF JAPAN vol. 1998, no. 05, 30. April 1998 (1998-04-30) & JP 10 007722 A (HYMO CORP), 13. Januar 1998 (1998-01-13)
- YUAMA, HIROSHI ET AL: "Preparation of monodisperse poly(N- vinylformamide ) particles by dispersion polymerization in methanol solvent" , CHEM. LETT. (1993), 2 261-2 XP000876971
- CHEMICAL ABSTRACTS, vol. 127, no. 1, 7. Juli 1997 (1997-07-07) Columbus, Ohio, US; abstract no. 5731, MURANO, MASAYUKI ET AL: "Manufacture of vinylamine-based polymer aqueous dispersions" XP002131405 & JP 09 071659 A (KURITA WATER INDUSTRIES, LTD., JAPAN) 18. März 1997 (1997-03-18)

## Beschreibung

Die Erfindung betrifft wäßrige Dispersionen von wasserlöslichen Polymerisaten von N-Vinylcarbonsäureamiden, Verfahren zu ihrer Herstellung und ihre Verwendung bei der Papierherstellung.

Aus der EP-A-01 83 466 ist ein Verfahren zur Herstellung von wäßrigen Dispersionen von wasserlöslichen Polymeren bekannt, wobei man kationische Monomere wie beispielsweise mit Benzylchlorid quaternierte Dialkylaminoalkylacrylamide in einer wäßrigen Salzlösung in Gegenwart eines polymeren Dispergiermittels polymerisiert. Als Dispergiermittel werden beispielsweise Polyole, Polyalkylenether, Alkalisalze der Polyacrylsäure und Alkalisalze von Poly-2-acrylamido-2-methylpropansulfonsäure verwendet. Die Salzkonzentration im Polymerisationsmedium beträgt vorzugsweise 15 Gew.-% bis zur Sättigungsgrenze.

Aus der DE-A-44 30 069 sind wäßrige, lösungsmittelfreie Dispersionen von kationischen Polymerisaten bekannt, die als Leimungsmittel für Papier verwendet werden. Die Polymeren werden durch radikalische Polymerisation von kationischen Monomeren gegebenenfalls in Mischung mit anderen Monomeren in Lösung, Dispersion oder Substanz hergestellt.

Aus der DE-A 195 32 229 ist ein Verfahren zur Herstellung niedrigviskoser, wasserlöslicher Polymerdispersionen bekannt. Bei diesem Verfahren werden wasserlösliche Monomere in Mischung mit einer vernetzungsfähigen N-Methylolverbindung in wäßriger Lösung in Gegenwart mindestens eines polymeren Dispergiermittels polymerisiert, wobei das resultierende Polymerisat mit dem Dispergiermittel unverträglich ist. Die so erhaltenen Dispersionen werden als Flockungsmittel verwendet.

Aus der WO-A-97/30094 ist ein Verfahren zur Herstellung von Dispersionen wasserlöslicher kationischer Vinylpolymerer bekannt, wobei man wasserlösliche, kationische hydrophob modifizierte Vinylmonomere oder wasserlösliche, nichtionische, hydrophobe Vinylmonomere mit wasserlöslichen, kationischen und/oder wasserlöslichen neutralen Vinylmonomeren in wäßrigen Salzlösungen unter Verwendung eines wasserlöslichen Initiators in Gegenwart von Stabilisatoren polymerisiert, die aus einem Pfropfcopolymer bestehen, das als Pfropfgrundlage Polyethylenoxid und als Seitenketten aufgepfropfte kationische Vinylmonomere enthält. Gegenstand der WO/A 97/34933 sind wäßrige Dispersionen von hochmolekularen, nichtionischen oder anionischen Polymeren, die durch Polymerisation der Monomeren in einer gesättigten Salzlösung unter Zusatz eines anionischen, wasserlöslichen Polymerstabilisators hergestellt werden. Bevorzugt eingesetzte Monomere sind Acrylamid und Acrylsäure.

Der Erfindung liegt die Aufgabe zugrunde, wäßrige Dispersionen, die praktisch frei von stabilisierenden anorganischen Salzen sind, aus wasserlöslichen Polymerisaten zur Verfügung zu stellen.

Die Aufgabe wird erfindungsgemäß gelöst mit wäßrigen Dispersionen von wasserlöslichen Polymerisaten des N-Vinylformamids- und/oder des N-Vinylacetamids, wenn die Dispersionen, bezogen auf 100 Gew.-Teile Wasser,
(A) 5 bis 80 Gew.-Teile eines wasserlöslichen N-Vinylformamid- und/oder N-Vinylacetamid-Einheiten enthaltenden Polymerisats mit Teilchengrößen von 50 nm bis 2 µm und
(B) 1 bis 50 Gew.-Teile mindestens eines polymeren Dispergiermittels enthalten, das mit den wasserlöslichen Polymerisaten (A) in wäßriger Lösung unverträglich ist, gemäß Anspruch 1.

Die wäßrigen Dispersionen von wasserlöslichen Polymerisaten enthalten vorzugsweise, bezogen auf 100 Gew.-Teile Wasser,
(A) 10 bis 50 Gew.-Teile eines wasserlöslichen N-Vinylformamidund/oder N-Vinylacetamid-Einheiten enthaltenden Polymerisats und
(B) 5 bis 40 Gew.-Teile mindestens eines polymeren Dispergiermittels, das mit den wasserlöslichen Polymerisaten (A) in wäßriger Lösung unverträglich ist.

Besonders bevorzugt sind solche Dispersionen, die als Komponente (A) Homopolymerisate des N-Vinylformamids enthalten. N-Vinylformamid- und N-Vinylacetamideinheiten können mit Hilfe der folgenden Formel charakterisiert werden: 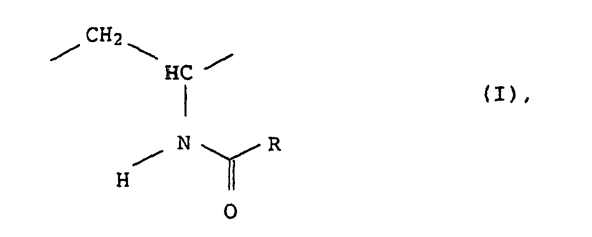 in der R = H oder CH₃ bedeutet.

Die wasserlöslichen N-Vinylformamid- und/oder N-Vinylacetamid-Einheiten enthaltenden Polymerisate können gegebenenfalls 1 bis 80, vorzugsweise 5 bis 30 Gew.-% an weiteren Monomeren copolymerisiert enthalten. Solche Monomere sind beispielsweise monoethylenisch ungesättigte Carbonsäuren mit 3 bis 8 C-Atomen wie Acrylsäure, Methacrylsäure, Dimethacrylsäure, Ethacrylsäure, Maleinsäure, Citraconsäure, Methylenmalonsäure, Allylessigsäure, Vinylessigsäure, Crotonsäure. Fumarsäure, Mesaconsäure und Itaconsäure. Aus dieser Gruppe von Monomeren verwendet man vorzugsweise Acrylsäure, Methacrylsäure, Maleinsäure oder Mischungen der genannten Carbonsäuren. Die monoethylenisch ungesättigten Carbonsäuren werden entweder in Form der freien Säuren oder in Form ihrer Alkalimetall-, Erdalkalimetall- oder Ammoniumsalze bei der Copolymerisation eingesetzt. Zur Neutralisation der freien Carbonsäuren verwendet man vorzugsweise Natronlauge, Kalilauge, Soda, Pottasche, Natriumhydrogencarbonat, Magnesiumoxid, Calciumhydroxid, Calciumoxid, gasförmiges oder wäßriges Ammoniak, Triethylamin, Ethanolamin, Diethanolamin, Triethanolamin, Morpholin, Diethylentriamin oder Tetraethylenpentamin.

Weitere geeignete Comonomere sind beispielsweise die Ester, Amide und Nitrile der obenangegebenen Carbonsäuren, z.B. Acrylsäuremethylester, Acrylsäureethylester, Methacrylsäuremethylester, Methacrylsäurethylester, Hydroethylacrylat, Hydroxypropylacrylat, Hydroxybutylacrylat, Hydroxyethylmethacrylat, Hydroxypropylmethacrylat, Hydroxyisobutylacrylat, Hydroxyisobutylmethacrylat, Maleinsäuremonomethylester, Maleinsäuredimethylester, Maleinsäuremonoethyslester, Maleinsäurediethylester, 2-Ethylhexylacrylat, 2-Ethylhexylmethacrylat, Acrylamid, Methacrylamid, N-Dimethylacrylamid, N-tert.-Butylacrylamid, Acrylnitril, Methacrylnitril, Dimethylaminoethylacrylat, Diethylaminoethylacrylat, Diethylaminoethylmethacrylat sowie die Salze der zuletzt genannten basischen Monomeren mit Carbonsäuren oder Mineralsäuren sowie die quaternierten Produkte der basischen (Meth)acrylate.

Außerdem eignen sich als andere copolymerisierbare Monomere Acrylamidoglykolsäure, Vinylsulfonsäure, Allylsulfonsäure, Methallylsulfonsäure, Styrolsulfonsäure, Acrylsäure-(3-sulfopropyl)ester, Methacrylsäure-(3-sulfopropyl)ester und Acrylamidomethylpropansulfonsäure sowie Phosphonsäuregruppen enthaltende Monomere wie Vinylphosphonsäure, Allylphosphonsäure und Acrylamidomethanpropanphosphonsäure. Die Säuregruppen enthaltenden Monomeren können in Form der freien Säuregruppen sowie in partiell oder in vollständig mit Basen neutralisierter Form bei der Polymerisation eingesetzt werden.

Weitere geeignete copolymerisierbare Verbindungen sind N-Vinylpyrrolidon, N-Vinylcaprolactam, N-Vinylimidazol, N-Vinyl-2-methylimidazol, N-Vinyl-4-methylimidazol, Diallylammoniumchlorid, Vinylacetat, Vinylpropionat und Styrol. Es ist selbstverständlich auch möglich, Mischungen der genannten Monomeren einzusetzen. Sofern die genannten Monomeren bei alleiniger Polymerisation keine wasserlöslichen Polymerisate ergeben, enthalten die N-Vinylformamid- und/oder N-Vinylacetamid-Einheiten enthaltenden Polymerisate diese Comonomeren nur in solchen Mengen einpolymerisiert, daß die Copolymerisate noch wasserlöslich sind. Im Gegensatz zu Wasser-in-Öl-Polymeremulsionen sind für die erfindungsgemäßen wäßrigen Dispersionen keine organischen Lösemittel erforderlich. Wie aus dem eingangs angegebenen Stand der Technik hervorgeht, sind konzentrierte Lösungen anorganischer Salze ein übliches Mittel, um wäßrige Dispersionen von wasserlöslichen Polymerisaten herzustellen. Dadurch enthalten die bekannten Dispersionen eine sehr hohe Salzfracht. Die erfindungsgemäßen wäßrigen Dispersionen von wasserlöslichen Polymerisaten sind demgegenüber praktisch salzfrei. Die wäßrigen Dispersionen wasserlöslicher Polymerisate von N-Vinylformamid und/oder N-Vinylacetamid besitzen vorzugsweise einen hohen Polymerisatgehalt und enthalten vorzugsweise Polymerisate mit hohen Molmassen bei gleichzeitig geringer Viskosität. Die Molmassen der N-Vinylformamid- und/oder N-Vinylacetamid-Einheiten enthaltenden Polymerisate betragen beispielsweise 5 · 10⁴ bis 1 · 10⁷, vorzugsweise 2 · 10⁵ bis 1 · 10⁶.

Die als Komponente (B) in den wäßrigen Dispersionen außerdem enthaltenden polymeren Dispergiermittel unterscheiden sich in der Zusammensetzung von den oben beschriebenen wasserlöslichen Polymerisaten (A). Das polymere Dispergiermittel (B) ist mit den wasserlöslichen Polymerisaten (A) unverträglich. Die mittleren Molmassen der polymeren Dispergiermittel liegen vorzugsweise in dem Bereich von 1000 bis 500 000, insbesondere bei 1500 bis 50000.

Die polymeren Dispergiermittel enthalten wenigstens eine funktionelle Gruppe, ausgewählt aus Ether-, Hydroxyl-, Carboxyl-, Sulfon-, Sulfatester-, Amino-, Imino-, tert.-Amino-, und/oder quaternären Ammoniumgruppen. Beispiele für solche Verbindungen sind: Carboxymethylcellulose, wasserlösliche Stärke und Stärkederivate, Stärkeester, Stärkexanthogenate, Stärkeacetate, Dextran, Polyalkylenglykole, Polyvinylacetat, Polyvinylalkohol, Polyvinylpyrrolidon, Polyvinylpyridin, Polyethylenimin, Polyvinylimidazol, Polyvinylsubcinimid und Polydiallyldimethylammoniumchlorid.

Falls die wäßrigen Dispersionen von wasserlöslichen Polymerisaten von N-Vinylcarbonsäureamiden bei der Papierherstellung eingesetzt werden, verwendet man vorzugsweise zur Herstellung dieser Dispersionen polymere Dispergiermittel, die bei der Papierherstellung weitere prozeß- oder produktverbessernde Eigenschaften aufweisen. Auf diese Weise wird es möglich, dem Papierhersteller Kombinationslösungen anzubieten. Beispielsweise können die Dispergiermittel (B) der wäßrigen Dispersionen von wasserlöslichen Polymerisaten von N-Vinylcarbonsäureamiden aus Verbindungen ausgewählt sein, die bei der Papierherstellung als Fixiermittel, Naß- bzw. Trockenfestmittel, Dispergiermittel für anorganische Feststoffe, Antihaftmittel zum besseren Release von Walzen oder Detackifier gehören, wodurch die weichen, klebrigen Verunreinigungen des Papierstoffs in spröde Ablagerungen umgewandelt werden. Bei der Papierherstellung ist es selbstverständlich möglich, weitere Prozeßhilfsmittel zusammen mit den erfindungsgemäßen wäßrigen Dispersionen einzusetzen. So kann man beispielsweise mit einer erfindungsgemäßen wäßrigen Dispersion von Poly-N-vinylformamid zusätzlich ein retentionsaktives Polyacrylamid oder Polyethylenoxid einsetzen.

Die wäßrigen Dispersionen enthalten auf 100 Gew.-Teile Wasser 1 bis 50, vorzugsweise 5 bis 40 Gew.-Teile mindestens eines der oben angegebenen polymeren Dispergiermittel (B).

Gegenstand der Erfindung ist außerdem ein Verfahren zur Herstellung von wäßrigen Dispersionen von wasserlöslichen Polymerisaten des N-vinylformamids und/oder des N-Vinylacetamids, wobei man
(A) 5 bis 80 Gew.-Teile N-Vinylformamid und/oder N-Vinylacetamid gegebenenfalls zusammen mit anderen monoethylenisch ungesättigten Monomeren, die damit wasserlösliche Polymerisate bilden, und
(B) 1 bis 50 Gew.-Teile mindestens eines polymeren Dispergiermittels, das mit den aus den Monomeren (A) entstehenden Polymeren in wäßriger Lösung unverträglich ist,
in 100 Gew.-Teilen Wasser bei Temperaturen von 30 bis 95°C in Gegenwart von 0,001 bis 5,0 Gew.-%, bezogen auf die eingesetzten Monomeren, radikalisch polymerisiert.

In der bevorzugten Ausführungsform des Verfahrens polymerisiert man
(A) 10 bis 50 Gew.-Teile N-Vinylformamid und/oder N-Vinylacetamid gegebenenfalls zusammen mit anderen monoethylenisch ungesättigten Monomeren, die damit wasserlösliche Polymerisate bilden, und
(B) 5 bis 40 Gew.-Teile mindestens eines polymeren Dispergiermittels, das mit den aus den Monomeren (A) entstehenden Polymeren in wäßriger Lösung unverträglich ist, gemäß Anspruch 5,
in 100 Gew.-Teilen Wasser bei Temperaturen von 40 bis 70°C mit 0,5 bis 2,0 Gew.-%, bezogen auf die bei der Polymerisation eingesetzten Monomeren, an Azoverbindungen, die unter den Polymerisationsbedingungen in Radikale zerfallen.

Die Monomeren werden erfindungsgemäß radikalisch polymerisiert, d.h. man verwendet Polymerisationsinitiatoren, die unter den Polymerisationsbedingungen Radikale bilden. Geeignete Verbindungen dieser Art sind beispielsweise Wasserstoffperoxid, Peroxide, Hydroperoxide, Redoxkatalysatoren und nicht oxidierend wirkende Initiatoren wie Azoverbindungen, die unter den Polymerisationsbedingungen in Radikale zerfallen. Geeignete Azoverbindungen sind beispielsweise 2,2'-Azo-bis(2-amidionopropan)dihydrochlorid, 2,2'-Azo-bis(N,N'-dimethylenisobutyramidin)dihydrochlorid, 2,2'-Azo-bis(2,4-dimethylvaleronitril), 2,2'-Azo-bis[2-methyl-N-(2-hydroxyethyl)-propionamid] oder 2,2'-Azo-bis-isobutyronitril. Es ist selbstverständlich auch möglich, Mischungen verschiedener Initiatoren einzusetzen. Besonders bevorzugt ist ein Herstellverfahren für die wäßrigen Dispersionen von wasserlöslichen Polymerisaten, wobei man
(A) N-Vinylformamid gegebenenfalls zusammen mit anderen monoethylenisch ungesättigten Monomeren und
(B) Polyethylenglykol, Polyvinylpyrrolidon oder deren Mischungen bei Temperaturen von 40 bis 55°C mit wasserlöslichen Azostartern polymerisiert. Als polymere Dispergiermittel (B) kommen vorzugsweise Polyethylenglykol, Polypropylenglykol, Copolymerisate aus Ethylenglykol und Propylenglykol, Polyvinylacetat, Polyvinylalkohol, Polyvinylpyridin, Polyvinylimidazol, Polyvinylsuccinimid, Polydiallyldimethylammoniumchlorid, Polyethylenimin und deren Mischungen in Betracht. Die Molmassen dieser Polymeren betragen vorzugsweise 1500 bis 50000.

Falls Polymerdispersionen und Polymerisate mit niedrigen Molekulargewichten gewünscht werden, kann man beispielsweise die Initiatormengen, die bei der Polymerisation üblicherweise eingesetzt werden, erhöhen, so daß man auch Initiatormengen einsetzen kann, die außerhalb des oben angegebenen Bereichs für die Initiatormengen liegen. wäßrige Dispersionen von niedrigmolekularen Homo- und Copolymerisaten der in Betracht kommenden Vinylcarbonsäureamide können auch dadurch erhalten werden, daß man die Polymerisation in Gegenwart von Polymerisationsreglern durchführt und gegebenenfalls gleichzeitig höhere Menge als üblicherweise erforderlich an Initiatoren einsetzt. Geeignete Polymerisationsregler sind beispielsweise Schwefel in gebundener Form enthaltende Verbindungen wie Dodecylmercaptan, Thioglykolsäure, Thioessigsäure und Mercaptoalkohole wie Mercaptoethanol, Mercaptopropanole und Mercaptobutanole. Daneben kann man als Polymerisationsregler auch Ameisensäure, Isopropanol und Hydrazin in Form von Salzen mit starken Säuren verwenden.

Die Molekulargewichte der in der dispergierten Form vorliegenden Polymerisate können auch mit Hilfe der K-Werte nach Fikentscher charakterisiert werden. Die K-Werte betragen bis zu 300 und liegen vorzugsweise in dem Bereich von 130 bis 180. Aus Lichtstreuexperimenten folgt, daß ein K-Wert von 250 einem mittleren Molekulargewicht der Polymerisate von etwa 7 000 000 Dalton entspricht.

Durch Abspaltung von Formylgruppen aus N-Vinylformamideinheiten enthaltenden Polymerisaten und durch Abspaltung der Gruppe CH₃-CO- aus N-Vinylacetamideinheiten enthaltenden Polymerisaten entstehen jeweils Vinylamin-Einheiten enthaltende Polymerisate. Die Abspaltung kann partiell oder vollständig durchgeführt werden. Sofern die Hydrolyse in Gegenwart von Säuren vorgenommen wird, liegen die Vinylamin-Einheiten der Polymeren als Ammoniumsalze vor. Die Hydrolyse kann jedoch auch mit Hilfe von Basen vorgenommen werden, z.B. von Metallhydroxiden, insbesondere von Alkalimetall- und Erdalkalimetallhydroxiden. Vorzugsweise verwendet man Natriumhydroxid oder Kaliumhydroxid. In besonderen Fällen kann die Hydrolyse auch mit Hilfe von Ammoniak oder Aminen durchgeführt werden. Bei der Hydrolyse in Gegenwart von Basen liegen die Vinylamin-Einheiten in Form der freien Basen vor.

Als Hydrolysemittel eignen sich vorzugsweise Mineralsäuren, wie Halogenwasserstoffe, die gasförmig oder als wäßrige Lösung eingesetzt werden können. Vorzugsweise verwendet man konzentrierte Salzsäure, Schwefelsäure, Salpetersäure oder Phosphorsäure sowie organische Säuren, wie C₁- bis C₅-Carbonsäuren, sowie aliphatische oder aromatische Sulfonsäuren. Beispielsweise benötigt man pro Formylgruppenäquivalent in den N-Vinylformamideinheiten einpolymerisiert enthaltenden Polymeren 0,05 bis 2, insbesondere 1 bis 1,5 Moläquivalente einer Säure. Die Hydrolyse der N-Vinylformamind-Einheiten verläuft bedeutend schneller als die der N-Vinylacetamid-Einheiten aufweisenden Polymerisate. Sofern man Copolymerisate der in Betracht kommenden Vinylcarbonsäureamide mit anderen Comonomeren der Hydrolyse unterwirft, so können auch die im Copolymerisat enthaltenen Comonomer-Einheiten chemisch verändert werden. So entstehen beispielsweise aus vinylacetat-Einheiten vinylalkohol-Einheiten. Aus Acrylsäuremethylester-Einheiten entstehen bei der Hydrolyse Acrylsäure-Einheiten und aus Acrylnitril-Einheiten werden Acrylamid- bzw. Acrylsäure-Einheiten gebildet. Die Hydrolyse der N-Vinylformamid- und/oder Vinylacetamid-Einheiten der Polymerisate (A) kann zu 5 bis 100, vorzugsweise 10 bis 40 % durchgeführt werden. Obwohl die wäßrigen Dispersionen von wasserlöslichen N-Vinylcarbonsäureamiden beim Verdünnen mit Wasser in Lösung gehen, wird die Dispersion bei der Hydrolyse überraschenderweise nicht zerstört. Der Teilchendurchmesser der hydrolysierten Teilchen beträgt vor bzw. nach der Hydrolyse 50 nm bis 2 µ und liegt vorzugsweise in dem Bereich von 50 nm bis 2 µm und in den meisten Fällen bei 100 bis 700 nm.

Die oben beschriebenen Dispersionen, d.h. die nicht nichthydrolisierten als auch die hydrolysierten wäßrigen Dispersionen von wasserlöslichen N-Vinylcarbonsäureamiden werden als Entwässerungs-, Flockungs- und Retentionsmittel sowie als Naß- und Trockenfestigkeitsmittel und als Fixiermittel bei der Herstellung von Papier verwendet. Die kationischen Polymeren können außerdem als Flockungsmittel für Abwässer bei der Klärschlammentwässerung, als Flockungsmittel bei der Erzaufbereitung und der tertiären Erdölförderung oder als Dispergiermittel, z.B. für anorganische und organische Pigmente, Farbstoffe, Zement oder Pflanzenschutzmittel verwendet werden. Die nicht hydrolysierten wie auch die hydrolysierten wäßrigen Dispersionen sind außerdem als Verfestigungsmittel für Papier, als Fixiermittel für lösliche und unlöslichen Störstoffe bei der Papierherstellung und als Mittel für die Papierstreicherei einsetzbar. Sie können ferner als Beschichtungsmaterial für Düngemittel und Pflanzenschutzmittel und als Fußbodenpflegemittel eingesetzt werden. Auch in der Kosmetik, z.B. für haarkosmetische Zubereitungen, wie beispielsweise Conditioner, Haarfestiger oder als Conditioner für Hautpflegemittel sowie als Verdicker für Kosmetikformulierungen ferner als Bestandteil von kosmetischen Zubereitungen für die Mundpflege sind die genannten wäßrigen hydrolysierten bzw. nicht hydrolysierten Polymerdispersionen einsetzbar.

Die K-Werte wurden nach H. Fikentscher, Cellulose-Chemie, Band 13, 58-64 und 71-74 (1932) in wäßriger Lösung bei 25°C und Konzentrationen, die je nach K-Wert-Bereich zwischen 0,1 % und 5 Gew.-% liegen, bestimmt. Die Viskosität der Dispersionen wurde jeweils in einem Brookfield-Viskosimeter mit einer Spindel Nr. 4 bei 20 UpM und einer Temperatur von 20°C gemessen. Die Angaben in % sind Gewichtsprozent.

### Beispiel 1

In ein mit Ankerrührer, Stickstoffeinleitung, Destillationsbrücke und Vakuumregelung ausgestattetes 2l-Glasgefäß wurden 800 g wasser, 5 g Natriumdihydrogenphosphat-Dihydrat, 150 g Polyvinylpyrrolidon (K-Wert 30, bestimmt in 1 %iger wäßriger Lösung) sowie 150 g Polyethylenglykol der Molmasse 1500 eingewogen und durch Rühren zu einer homogenen Lösung verarbeitet. Man gab 500 g N-Vinylformamid zu und stellte danach durch Zusatz von 25 %iger wäßriger Natronlauge den pH-Wert der Lösung auf 6,5 ein. Man leitete permanent Stickstoff durch die Reaktionsmischung und gab eine Lösung von 2,5 g 2,2'-Azobis-(2-Aminopropan)dihydrochlorid in 100 g Wasser zu und erhitzte das Reaktionsgemisch zur Polymerisation auf eine Temperatur von 50°C. Die Polymerisation wurde bei dieser Temperatur und einem Druck von 130 mbar durchgeführt, wobei die entstehende Polymerisationswärme durch Siedekühlung abgeführt wurde. Die Polymerisationszeit betrug 13 Stunden. Innerhalb dieser Zeit wurde so viel Wasser abdestilliert, daß man eine wäßrige Dispersion mit einem Feststoffgehalt von 44 % erhielt. Sie hatte eine Viskosität von 15600 mPas, einen K-Wert von 140 (gemessen als 0,1 %ige Lösung in 5 %iger wäßriger NaCl-Lösung) und einen Restmonomergehalt an N-Vinylformamid von 0,1 %.

### Beispiel 2

In einem mit Ankerrührer, Stickstoffeinleitung, Destillationsbrücke und einer Vakuumregelung ausgestattetem 2l-Glasgefäß wurden 1200 g Wasser, 5 g Natriumdihydrogenphosphat-Dihydrat, 150 g Polyvinylpyrrolidon (K-Wert 30, bestimmt in 1 %iger wäßriger Lösung) sowie 150 g Polyethylenglykol der Molmasse 1500 vorgelegt. Die Mischung wurde gerührt und mit 643 g N-Vinylformamid versetzt. Der pH-Wert der Reaktionsmischung wurde durch Zugabe von 25 %iger wäßriger Natronlauge auf 6,5 eingestellt. Man leitete kontinuierlich Stickstoff durch das Reaktionsgemisch und gab 2,5 g 2,2'Azobis-(2-aminopropan)dihydrochlorid in Form einer Lösung in 100 g Wasser zu und erhitzte den Ansatz auf eine Polymerisationstemperatur von 50°C. Die Polymerisation wurde unter einem Druck von 130 mbar durchgeführt, wobei man innerhalb von 13 Stunden die entstehende Polymerisationswärme durch Siedekühlung abführte und so viel Wasser aus dem Reaktionsgemisch abdestillierte, daß man eine wäßrige Dispersion mit einem Feststoffgehalt von 44,1 % und einem Polyvinylformamidanteil von 25 % erhielt. Die Viskosität der wäßrigen Dispersion betrug 5800 mPas. Der K-Wert des Polymerisats betrug 148, der Restmonomergehalt lag bei 0,2 % N-Vinylformamid.

### Beispiel 3

In der im Beispiel 1 beschriebenen Vorrichtung bereitete man zunächst eine Lösung aus 1200 g Wasser, 5 g Natriumdihydrogenphosphat-Dihydrat, 150 g Polyvinylpyrrolidon (K-Wert 30, gemessen in 1 %iger wäßriger Lösung) sowie 150 g Polyethylenglykol der Molmasse 1500, gab dann 500 g N-Vinylformamid und so viel einer 25 %igen wäßrigen Natronlauge zu, daß der pH-Wert der Lösung 6,5 betrug. Man leitete kontinuierlich Stickstoff durch die Lösung, fügte eine wäßrige Lösung von 2,5 g 2,2'-Azobis-(-2-aminopropan)-dihydrochlorid in 100 g Wasser zu und erhitzte die Mischung auf eine Temperatur von 50°C. Die Polymerisation wurde unter einem Druck von 130 mbar innerhalb von 13 Stunden durchgeführt, wobei man zur Siedekühlung soviel Wasser abdestillierte, daß man eine wäßrige Polymerdispersion mit einem Feststoffgehalt von 41,0 % erhielt. Die Viskosität der Dispersion betrug 3075 mPas. Der Anteil von dispergiertem Polyvinylformamid betrug 20 %. Das Polymere hatte einen K-Wert (gemessen als 0,1 %ige Lösung in 5 %iger wäßriger NaCl-Lösung) von 138 und einen Restmonomergehalt von 0,2 %.

### Beispiel 4

In der im Beispiel 1 angegebenen Vorrichtung bereitete man eine Lösung aus 1044 g Wasser, 5 g Natriumdihydrogenphosphat-Dihydrat, 200 g eines partiell verseiften Polyvinylacetats mit einem Hydrolysegrad von 86 % und 100 g Polyethylenglykol der Molmasse 1500 und fügte unter Rühren 500 g N-Vinylformamid zu. Man gab dann soviel einer 25 %igen wäßrigen Natronlauge zu, daß der pH-Wert 6,5 betrug. Man leitete Stickstoff durch das Reaktionsgemisch und gab eine Lösung von 2,5 g 2,2'-Azobis-(2-aminopropan)dihydrochlorid gelöst in 1000 g Wasser zu und erhitzte das Reaktionsgemisch auf eine Polymerisationstemperatur von 50°C. Die Polymerisation wurde unter einem Druck von 130 mbar über eine Zeitraum von 13 Stunden und Abführen der Polymerisationswärme durch Siedekühlung durchgeführt. Man destillierte so viel Wasser ab, daß man eine wäßrige Dispersion mit einem Feststoffgehalt von 36 % erhielt. Das Polymerisat hatte einen K-Wert (gemessen bei einer Polymerkonzentration von 0,1 % in 5 %iger wäßriger NaCl-Lösung) von 130 und einen Restmonomergehalt von 0,1 %. Der Teilchendurchmesser der dispergierten Teilchen betrug 200 nm.

### Beispiel 5

In der im Beispiel 1 angegebenen Apparatur leitete man zunächst eine wäßrige Lösung, indem man darin 836 g Wasser, 5 g Natriumdihydrogenphosphat-Dihydrat, 150 g eines Copolymerisates aus N-Vinylcaprolactam und N-Vinylmethylacetamid im Molverhältnis 1 : 1 mit einer Molmasse von 45000 sowie 150 g Polyethylenglykol mit einer Molmasse von 1500 vorlegte, 500 g N-Vinylformamid unter Rühren zugab und durch Zugabe von 25 %iger wäßriger Natronlauge den pH-Wert der Lösung auf 6,5 einstellte. Man leitete dann kontinuierlich Stickstoff durch die Mischung, setzte eine Lösung von 2,5 g 2,2'-Azobis-(2-aminopropan)dihydrochlorid in 100 g Wasser zu und erhitzte die Mischung auf eine Temperatur von 50°C, bei der die Polymerisation durchgeführt wurde. Gleichzeitig stellte man einen Druck von 130 mbar ein und führte die entstehende Polymerisationswärme durch Siedekühlung ab. Dabei wurde über einen Zeitraum von 13 Stunden so viel Wasser abdestilliert, daß eine wäßrige Polymerdispersion mit einem Feststoffgehalt von 43 % entstand. Der Polyvinylformamidgehalt betrug 26,9 %. Die wäßrige Lösung hatte eine Viskosität von 8700 mPas. Das Polymerisat hatte einen K-Wert (gemessen in 5 %iger wäßriger NaCl-Lösung bei einer Polymerkonzentration von 0,1 %) von 110,2 und einen Restmonomergehalt an N-Vinylformamid von 0,2 %. Die Teilchengröße des dispergierten Polymeren betrug 200 nm.

### Beispiel 6

216,7 g der nach Beispiel 1 hergestellten wäßrigen Polymerdispersion wurden in einem 250 ml fassenden 3-Halskolben vorgelegt, der mit einem Gaseinleitungsrohr, Rückflußkühler und Rührer ausgestattet war. Unter Rühren leitete man innerhalb von 10 min 4 g gasförmigen Chlorwasserstoff ein. Das Reaktionsgemisch wurde dabei auf eine Temperatur von 50°C erwärmt und bei dieser Temperatur 5 Stunden gerührt. Danach betrug der Hydrolysegrad des Polymeren 10,1 %, d.h. daß Polymer enthielt 10,1 % Vinylamineinheiten. Durch Einleiten von 2,2 g Ammoniakgas wurde das Reaktionsgemisch neutralisiert. Der pH-Wert lag bei 7,5. Die Dispersion hatte eine viskosität von 16600 mPas. Die mittlere Teilchengröße der dispergierten Teilchen betrug 250 nm. Das Polymer hatte eine Molmasse von 900000 Dalton.

### Beispiel 7

206 g der nach Beispiel 3 hergestellten wäßrigen Dispersion wurden in einem 250 ml fassenden 3-Halskolben vorgelegt, der mit Gaseinleitungsrohr, Rückflußkühler und Rührer ausgestattet war. Unter Rühren wurden dann 20,3 g Chlorwasserstoffgas innerhalb von 25 Min eingeleitet. Das Reaktionsgemisch wurde dabei auf 75°C erhitzt und anschließend 2 Stunden bei dieser Temperatur gerührt. Der Hydrolysegrad des Poly N-Vinylformamids betrug 75 %. Die Dispersion hatte eine Viskosität von 7040 mPas. Die Teilchengröße der Dispersion betrug 300 nm. Die Molmasse des Polymeren betrug 500000 Dalton.

### Beispiel 8

212 g der nach Beispiel 3 erhaltenen Dispersion wurden in einem 250 ml fassenden 3-Halskolben vorgelegt. Dann leitete man unter Rühren 2,8 g gasförmigen Chlorwasserstoff ein und erhitzte das Reaktionsgemisch auf eine Temperatur von 50°C. Die Mischung wurde anschließend 6,5 Stunden bei dieser Temperatur gerührt. Danach betrug der Hydrolysegrad des Polymeren 8,5 %. Die wäßrige Dispersion hatte eine Viskosität von 4800 mPas. Die Teilchengröße der dispergierten Teilchen lag bei 200 nm. Das Polymer hatte eine Molmasse von 1,2 · 10⁶ Dalton.

### Beispiel 9

217,8 g der nach Beispiel 3 hergestellten Polymerdispersion wurden in einem 250 ml fassenden 3-Halskolben vorgelegt. Danach leitete man unter Rühren 8 g gasförmigen Chlorwasserstoff ein und erhitzte das Reaktionsgemisch auf 50°C. Die Mischung wurde 7 Stunden bei dieser Temperatur gerührt. Danach betrug der Hydrolysegrad des Polymeren 27,4 %. Die wäßrige Dispersion hatte eine Viskosität von 4950 mPas. Die Teilchengröße der dispergierten Teilchen betrug 370 nm, die Molmasse 1,07 · 10⁶ Dalton.

### Anwendungstechnische Beispiele

### Bestimmung der Entwässerungszeit

Die Entwässerungszeit wurde in einem Schopper-Riegler-Testgerät bestimmt, indem man 1 l der zu prüfenden Faserstoffaufschlämmung darin entwässerte und die Entwässerungszeit jeweils nach einem Durchlauf von 700 ml Wasser ermittelte.

### Optische Durchlässigkeit des Siebwassers

Die optische Durchlässigkeit des Siebwassers ist ein Maß für die Retention von Fein- und Füllstoffen. Sie wurde mit Hilfe eines Photometers bestimmt und in Prozent angegeben. Je höher der Wert für die optische Durchlässigkeit ist, desto besser ist die Retenion. Folgende Einsatzstoffe wurden verwendet:

Zum Vergleich mit dem Stand der Technik dienten die Polymeren I und II.

### Polymer I:

Polyamidoamin aus Adipinsäure und Diethylentriamin, gepfropft mit Ethylenimin und vernetzt mit α,ω-Dichloropolyethylenglykolether (kationisches Entwässerungs- und Retentionsmittel gemäß US-A 4 144 123).

### Polymer II:

Handelsübliches kationisches Copolymerisat aus 70 % Acrylamid und 30 % Dimethylaminoethylacrylatchlorid, K-Wert des Copolymeren 250.

### Polymer III:

Handelsübliches kationisches Polyacrylamid, (Praesterat® K 350)
Erfindungsgemäß zu verwendende Polymere:

### Polymer IV:

Wäßrige Dispersion, die nach Beispiel 8 erhalten wurde (Copolymer aus 91,5 % N-Vinylformamid-Einheiten und 8,5 % Vinylamin-Einheiten).

### Beispiel 10

Man stellte eine Pulpe mit einer Stoffdichte von 2 g/l aus deinktem Altpapier her und gab zum Stoff zusätzlich noch 0,2 g/l China-Clay. Der Papierstoff hatte einen pH-Wert von 7. Man bestimmte zunächst die Entwässerungsgeschwindigkeit und danach die optische Durchlässigkeit des Siebwassers. Der Nullwert der Entwässerungszeit betrug 79 s. Danach setzte man die in den Tabellen 1 und 2 angegebenen Polymere in Mengen von 0,02, 0,04 und 0,08 %, bezogen auf trockenen Faserstoff, zur Faserstoffsuspernsion zu und bestimmte die Entwässerungszeiten und die optische Durchlässigkeit der Siebwässer. Dabei wurden die in den Tabellen 1 und 2 angegebenen Resultate ermittelt.

### Entwässerungszeit [s]

| | Zusatz [%] 0,02 | Polymer 0,04 | zum Papierstoff 0,08 |
|---|---|---|---|
| Polymer I | 55 | 40 | 28 |
| Polymer II | 33 | 25 | 18 |
| Polymer III | 43 | 32 | 23 |
| Polymer IV | 39 | 30 | 23 |

### Optische Durchlässigkeit [%]

| | Zusatz [%] 0,02 | Polymer 0,04 | zum Papierstoff 0,08 |
|---|---|---|---|
| Polymer I | 51 | 63 | 77 |
| Polymer II | 73 | 86 | 93 |
| Polymer III | 62 | 75 | 86 |
| Polymer IV | 67 | 74 | 83 |

## Patentansprüche

1. Wäßrige Dispersionen von wasserlöslichen Polymerisaten des N-Vinylformamids und/oder des N-Vinylacetamids, **dadurch gekennzeichnet, daß** die Dispersionen, bezogen auf 100 Gew.-Teile Wasser,
(A) 5 bis 80 Gew.-Teile eines wasserlöslichen N-Vinylformamid- und/oder N-Vinylacetamid-Einheiten enthaltenden Polymerisats mit Teilchengrößen von 50 nm bis 2 µm und
(B) 1 bis 50 Gew.-Teile mindestens eines polymeren Dispergiermittels enthalten, das ausgewählt ist aus der-Gruppe bestehend aus Carboxymethylcellulose, wasserlösliche Stärke, Stärkeester, Stärkexanthogenate, Stärkeacetate, Dextran, Polyalkylenglykole, Polyvinylacetat, Polyvinylalkohol, Polyvinylpyrrolidon, Polyvinylpyridin, Polyethylenimin, Polyvinylimidazol, Polyvinylsuccinimid und Polydiallyldimethylammoniumchlorid.

2. Wäßrige Dispersionen von wasserlöslichen Polymerisaten nach Anspruch 1, **dadurch gekennzeichnet, daß** die Dispersionen, bezogen auf 100 Gew.-Teile Wasser,
(A) 10 bis 50 Gew.-Teile eines wasserlöslichen N-Vinylformamid- und/oder eines N-Vinylacetamid-Einheiten enthaltenden Polymerisats und
(B) 5 bis 40 Gew.-Teile mindestens eines polymeren Dispergiermittels enthalten.

3. Wäßrige Dispersionen von wasserlöslichen Polymerisaten nach Anspruch 1 oder 2, **dadurch gekennzeichnet, daß** die Dispersionen als Komponente (A) Homopolymerisate des N-Vinylformamids enthalten.

4. Wäßrige Dispersionen von wasserlöslichen Polymerisaten nach Anspruch 1 oder 2, **dadurch gekennzeichnet, daß** die N-Vinylformamid- und/oder Vinylacetamid-Einheiten der Polymerisate (A) durch Hydrolyse mit Säuren oder Basen teilweise oder vollständig in Vinylamin-Einheiten enthaltende Polymerisate überführt worden sind.

5. Verfahren zur Herstellung von wäßrigen Dipersionen von wasserlöslichen Polymerisaten des N-Vinylformamids und/oder des N-Vinylacetamids, **dadurch gekennzeichnet, daß** man
(A) 5 bis 80 Gew.-Teile N-Vinylformamid und/oder N-Vinylacetamid gegebenenfalls zusammen mit anderen monoethylenisch ungesättigten Monomeren, die damit wasserlösliche Polymerisate bilden, und
(B) 1 bis 50 Gew-Teile mindestens eines polymeren Dispergiermittels, das ausgewählt ist aus der Gruppe bestehend aus Carboxymethylcellulose, wasserlösliche Stärke, Stärkeester, Stärkexanthogenate, Stärkeacetate, Dextran, Polyalkylenglykole, Polyvinylacetat, Polyvinylalkohol, Polyvinylpyrrolidon, Polyvinylpyridin, Polyethylenimin, Polyvinylimidazol, Polyvinylsuccinimid und Polydiallyldimethylammoniumchlorid
in 100 Gew.-Teilen Wasser bei Temperaturen von 30 bis 95°C in Gegenwart von 0,001 bis 5,0 Gew.-%, bezogen auf die eingesetzten Monomeren, Polymerisationsinitiatoren radikalisch polymerisiert.

6. Verfahren nach Anspruch 5, **dadurch gekennzeichnet, daß** man
(A) 10 bis 50 Gew.-Teile N-Vinylformamid und/oder Vinylacetamid gegebenenfalls zusammen mit anderen monoethylenisch ungesättigten Monomeren, die damit wasserlösliche Polymerisate bilden, und
(B) 5 bis 40 Gew.-Teile mindestens eines polymeren Dispergiermittels
in 100 Gew.-Teilen Wasser bei Temperaturen von 40 bis 70°C mit 0,5 bis 2,0 Gew.-%, bezogen auf die bei der Polymerisation eingesetzten Monomeren, an Azoverbindungen polymerisiert, die unter den Polymerisationsbedingungen in Radikale zerfallen.

7. Verfahren nach Anspruch 5 oder 6, **dadurch gekennzeichnet, daß** man als polymere Dispergiermittel (B) Polyethylenglykol, Polypropylenglykol, Copolymerisate aus Ethylenglykol und Propylenglykol, Polyvinylacetat, Polyvinylalkohol, Polyvinylpyridin, Polyvinylimidazol, Polyvinylsuccinimid, Polydiallyldimethylammoniumchlorid, Polyethylenimin und deren Mischungen einsetzt.

8. Verfahren nach einem der Ansprüche 5 bis 7, **dadurch gekennzeichnet, daß** man
(A) N-Vinylformamid gegebenenfalls zusammen mit anderen monoethylenisch ungesättigten Monomeren und
(B) Polyethylenglykol, Polyvinylpyrrolidon oder deren Mischungen
bei Temperaturen von 40 bis 55°C mit wasserlöslichen Azostartern polymerisiert.

9. Verwendung der wäßrigen Dispersionen von wasserlöslichen Polymeren nach den Ansprüchen 1 bis 4 als Entwässerungs-, Flockungs- und Retentionsmittel sowie als Naß- und Trockenfestigkeitsmittel und als Fixiermittel bei der Herstellung von Papier.

## Claims

1. An aqueous dispersion of a water-soluble polymer of N-vinylformamide and/or of N-vinylacetamide, wherein the dispersion contains, based on 100 parts by weight of water,
(A) from 5 to 80 parts by weight'of a water-soluble polymer containing N-vinylformamide units and/or N-vinylacetamide units and having a particle size of from 50 nm to 2 µm
(B) from 1 to 50 parts by weight of at least one polymeric dispersant which is selected from the group consisting of carboxymethylcellulose, water-soluble starch, starch esters, starch xanthates, starch acetates, dextran, polyalkylene glycols, polyvinyl acetate, polyvinyl alcohol, polyvinylpyrrolidone, polyvinylpyridine, polyethyleneimine, polyvinylimidazole, polyvinylsuccinimide and polydiallyldimethylammonium chloride.

2. An aqueous dispersion of a water-soluble polymer as claimed in claim 1, wherein the dispersion contains, based on 100 parts by weight of water,
(A) from 10 to 50 parts by weight of a water-soluble polymer containing N-vinylformamide units and/or of a water-soluble polymer containing N-vinylacetamide units and
(B) from 5 to 40 parts by weight of at least one polymeric dispersant.

3. An aqueous dispersion of a water-soluble polymer as claimed in claim 1 or 2, wherein the dispersion contains as component (A) a homopolymer of N-vinylformamide.

4. An aqueous dispersion of a water-soluble polymer as claimed in claim 1 or 2, wherein the N-vinylformamide units and/or vinylacetamide units of the polymer (A) have been partially or completely converted into a polymer containing vinylamine units by hydrolysis with acids or bases.

5. A process for the preparation of aqueous dispersions of water-soluble polymers of N-vinylformamide and/or of N-vinylacetamide, wherein
(A) from 5 to 80 parts by weight of N-vinylformamide and/or N-vinylacetamide, if desired together with other monoethylenically unsaturated monomers, which form water-soluble polymers therewith, and
(B) from 1 to 50 parts by weight of at least one polymeric dispersant which is selected from the group comprising carboxymethylcellulose, water-soluble starch, starch esters, starch xanthates, starch acetates, dextran, polyalkylene glycols, polyvinyl acetate, polyvinyl alcohol, polyvinylpyrrolidone, polyvinylpyridine, polyethyleneimine, polyvinylimidazole, polyvinylsuccinimide and polydiallyldimethylammonium chloride,
in 100 parts by weight of water, are subjected to free radical polymerization at from 30 to 95°C in the presence of from 0.001 to 5.0% by weight, based on the monomers used, of polymerization initiators.

6. A process as claimed in claim 5, wherein
(A) from 10 to 50 parts by weight of N-vinylformamide and/or vinylacetamide, if desired together with other monoethylenically unsaturated monomers which form water-soluble polymers therewith, and
(B) from 5 to 40 parts by weight of at least one polymeric dispersant,
in 100 parts by weight of water, are polymerized at from 40 to 70°C with from 0.5 to 2.0% by weight, based on the monomers used in the polymerization, of azo compounds which decompose into free radicals under the polymerization conditions.

7. A process as claimed in claim 5 or 6, wherein the polymeric dispersants (B) used are polyethylene glycol, polypropylene glycol, copolymers of ethylene glycol and propylene glycol, polyvinyl acetate, polyvinyl alcohol, polyvinylpyridine, polyvinylimidazole, polyvinylsuccinimide, polydiallyldimethylammonium chloride, polyethyleneimine and mixtures thereof.

8. A process as claimed in any of claims 5 to 7, wherein
(A) N-vinylformamide, if desired together with other monoethylenically unsaturated monomers, and
(B) polyethylene glycol, polyvinylpyrrolidone or mixtures thereof
are polymerized at from 40 to 55°C with water-soluble azo initiators.

9. The use of the aqueous dispersions of water-soluble polymers as claimed in claims 1 to 4 as drainage aid, flocculant and retention aid and as wet and dry strength agent and as fixing composition in papermaking.

## Revendications

1. Dispersions aqueuses de polymères solubles dans l'eau de N-vinylformamide et/ou de N-vinylacétamide, **caractérisées en ce que** les dispersions contiennent, par rapport, à 100 parties en poids d'eau,
(A) de 5 à 80 parties en poids d'un polymère contenant des unités de N-vinylformamide et/ou de N-vinylacétamide, d'une taille de particules de 50 nm à 2 µm et
(B) de 1 à 50 parties en poids d'au moins un agent de dispersion polymère, choisi dans le groupe formé par la carboxyméthylcellulose, des amidons solubles dans l'eau, des esters d'amidon, des xanthogénates d'amidon, des acétates d'amidon, du dextrane, des polyalkylène glycols, du poly(acétate de vinyle), du poly(alcool vinylique), de la polyvinylpyrrolidone, de la polyvinylpyridine, de la polyéthylène imine, du poly(vinylimidazol)e, du poly(succinimide de vinyle) et du poly(chlorure de diallyldiméthylammonium).

2. Dispersions aqueuses de polymères solubles dans l'eau selon la revendication 1, **caractérisées en ce que** les dispersions contiennent, part rapport à 100 parties en poids d'eau,
(A) de 10 à 50% en poids d'un polymère soluble dans l'eau contenant des unités de N-vinylformamide et/ou de N-vinylacétamide et
(B) de 5 à 40% en poids d'au moins un agent de dispersion polymère.

3. Dispersions aqueuses de polymères solubles dans l'eau selon la revendication 1 ou 2, **caractérisées en ce que** les dispersions contiennent en tant que composant (A) des homopolymères de N-vinylformamide.

4. Dispersions aqueuses de polymères solubles dans l'eau selon la revendication 1 ou 2, **caractérisées en ce que** les unités de N-vinylformamide et/ou de N-vinylacétamide des polymères (A) sont, par hydrolyse avec des acides ou des bases, converties partiellement ou totalement en polymères contenant des unités de vinylamine.

5. Procédé de préparation de dispersions aqueuses de polymères solubles dans l'eau de N-vinylformamide et/ou de N-vinylacétamide, **caractérisées en ce que** l'on polymérise par voie radicalaire
(A) de 5 à 80 parties en poids de N-vinylformamide et/ou de N-vinylacétamide, éventuellement ensemble avec d'autres monomères monoéthyléniquement insaturés, qui forment avec eux des polymères solubles dans l'eau, et
(B) de 1 à 50 parties en poids d'au moins un agent de dispersion polymère choisi dans le groupe formé par la carboxyméthylcellulose, des amidons solubles dans l'eau, des esters d'amidon, des xanthogénates d'amidon, des acétates d'amidon, du dextrane, des polyalkylène glycols, du poly(acétate de vinyle), du poly(alcool vinylique), de la polyvinylpyrrolidone, de la polyvinylpyridine, dune polyéthylène imine, du poly(vinylimidazole), du poly(succinimide de vinyle) et du poly(chlorure de diallyldiméthylammonium)
dans 100 parties en poids d'eau, à des températures de 30 à 95°C et en présence de 0,001 à 5,0% en poids d'initiateurs de polymérisation radicalaire, par rapport aux monomères mis en oeuvre.

6. Procédé selon la revendication 5, **caractérisé en ce que** l'on polymérise
(A) de 10 à 50% en poids d'unités de N-vinylformamide et/ou de N-vinylacétamide, éventuellement ensemble avec d'autres monomères monoéthyléniquement insaturés, qui forment avec eux des polymères solubles dans l'eau, et
(B) de 5 à 40% en poids d'au moins un agent de dispersion polymère
dans 100 parties en poids d'eau, à des températures de 40 à 70°C, avec de 0,5 à 2,0% en poids, par rapport aux monomères mis en oeuvre dans la polymérisation, de composés azoïques, qui se décomposent en radicaux dans les conditions de polymérisation.

7. Procédé selon la revendication 5 ou 6, **caractérisé en ce que** l'on met en oeuvre en tant qu'agent de dispersion polymère (B) du polyéthylène glycol, du polypropylène glycol, des copolymères d'éthylène glycol et de propylène glycol, du poly(acétate de vinyle), du poly(alcool vinylique), de la polyvinylpyridine, du poly(vinylimidazole), du poly(succinimide de vinyle), du poly(chlorure de diallyldiméthylammonium), des polyéthylène imines et leurs mélanges.

8. Procédé selon l'une quelconque des revendications 5 à 7, **caractérisé en ce que** l'on polymérise
(A) du N-vinylformamide, éventuellement ensemble avec d'autres monomères monoéthyléniquement insaturés et
(B) du polyéthylène glycol, de la polyvinylpyrrolidone ou leurs mélanges, à des températures de 40 à 55°C et avec des amorces azoïques solubles dans l'eau.

9. Utilisation des dispersions aqueuses de polymères solubles dans l'eau selon les revendications 1 à 4 comme agents de déshydratation, de floculation et de rétention, ainsi que comme agents de résistance au mouillé et à sec, et comme agents de fixation dans la fabrication du papier.
